(19) Europäisches Patentamt
European Patent Office
Office européen des brevets

(11) **EP 2 544 056 A1**

(12) **EUROPÄISCHE PATENTANMELDUNG**

(43) Veröffentlichungstag:
**09.01.2013 Patentblatt 2013/02**

(51) Int Cl.:
***G05B 13/04*** *(2006.01)*

(21) Anmeldenummer: **11172644.4**

(22) Anmeldetag: **05.07.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **SIEMENS AKTIENGESELLSCHAFT
80333 München (DE)**

(72) Erfinder:
• **Lohner, Lena Dr.
76187 Karlsruhe (DE)**
• **Pfeiffer, Bernd-Markus, Dr.
76744 Wörth (DE)**

(54) **Engineering System zum Erstellen eines Steuerprogramms mit einem zeitdiskreten Kalman-Filter, das verzögert eintreffende Messwerte berücksichtigt**

(57) Die Erfindung betrifft ein Engineering-System zum Erstellen eines Steuerprogramms (10) wobei das Steuerprogramm mehrere Software-Funktionsbausteine umfasst, welche aus einer Bibliothek (11) entnommen sind. In der Bibliothek ist ein Funktionsbaustein (13) mit einem als zeitdiskretes Kalman-Filter ausgeführten Zustandsschätzer enthalten. Das Kalman-Filter (7) ist dazu ausgebildet, zumindest einen Messwert (6') zumindest einer Messgröße (6'') als Messwert einer Zustandsgröße zu verarbeiten. Dabei kann der Zeitpunkt der Eingabe des Messwerts (6') in das Kalman-Filter gegenüber dem Zeitpunkt seiner Erfassung am Prozess (3) um ein Vielfaches der Zeitdauer der Abtastschritte des Kalman-Filters verzögert sein. Zur Verbesserung der Genauigkeit der Verarbeitung wird der Messwert seiner jeweiligen Verzögerung entsprechend in die Schätzung eingebracht. In vorteilhafter Weise können somit komplexere Messmethoden, welche zeitverzögert Messergebnisse liefern, mit dem Kalman-Filter kombiniert werden. Beispielsweise können sporadisch erhaltene Laborergebnisse in die Schätzung des Kalman-Filters einbezogen werden.

FIG 1

**Beschreibung**

Die Erfindung betrifft ein Engineering-System zum Erstellen eines Steuerprogramms, wobei das Steuerprogramm mehrere Software-Funktionsbausteine umfasst, welche einer Bibliothek entnommen sind.

Ein derartiges Engineering-System ist aus dem Katalog Siemens ST PCS 7, Februar 2010, Kapitel 3 bekannt. Zur Erstellung eines Steuerprogramms werden in dem Engineering-System mit Hilfe eines grafischen Projektierungswerkzeugs vorgefertigte Funktionsbausteine aus einer Bibliothek ausgewählt, auf der grafischen Arbeitsfläche platziert, grafisch verschaltet und parametriert. Ein fertig gestelltes SIMATIC PCS 7-Projekt wird in einem weiteren Arbeitsschritt übersetzt und in ein Zielsystem, z. B. auf ein Automatisierungsgerät, geladen. Basiselemente für die grafische Projektierung von Automatisierungslösungen sind somit die in Bibliotheken organisierten, vorgefertigten und getesteten Funktionsbausteine. Die Verwendung dieser Bibliothekselemente trägt wesentlich dazu bei, den Engineering-Aufwand und damit die Projektkosten zu minimieren. In das Engineering-System ist insbesondere eine so genannte Advanced Process Library als Bibliothek integriert, in welcher u. a. Funktionsbausteine für höherwertige Regelalgorithmen hinterlegt sind.

Für einen Anlagenbetreiber wichtige Größen eines Prozesses, wie zum Beispiel Qualitätsgrößen, oder Größen, die das Verhalten in einem Reaktor oder das "Wohlbefinden" der Bakterien in einem Bioreaktor beschreiben, sind oftmals unbekannt, da sie beispielsweise an unzugänglichen Stellen gemessen werden müssten, kein wirtschaftlich vertretbares Messverfahren zur Onlinebestimmung existiert oder die gesuchte Größe keine direkt physikalisch messbare Größe ist. Um dennoch den Prozess fahren zu können, werden häufig geeignete Ersatzgrößen herangezogen, welche mit der gesuchten Größe, zum Beispiel der oben genannten Qualitätsgröße, in gewissem Maße korrelieren. Eine verbesserte Fahrweise des Prozesses könnte dagegen mit einem dynamischen "Soft-Sensor" erhalten werden, welcher die nichtmessbare prozessrelevante Größe auf Basis verschiedener messbarer Größen bestimmt. Der hinsichtlich Genauigkeitsanforderungen, Wiedergabe des dynamischen Verhaltens und Modellierungsmöglichkeiten am besten geeignete "Soft-Sensor" ist das so genannte Kalman-Filter. Es ermöglicht auf der Basis von physikalischen Modellen, stochastischen Erweiterungen, Freiheitsgraden für Modellunsicherheiten sowie einer Onlineanpassung der Schätzung an das tatsächliche Prozessverhalten die Bestimmung vieler gesuchter Größen.

So genannte "extended Kalman-Filter", die auch als erweiterte Kalman-Filter bezeichnet werden, sind etablierte Filter zur Bestimmung von nichtmessbaren Variablen dynamischer Systeme, die auf rauschbehafteten Messwerten anderer Variablen basieren. Dazu wird ein nichtlineares Modell der Systemdynamik zugrunde gelegt und es werden bestimmte Annahmen über die statistischen Eigenschaften der Störungen getroffen. Kalman-Filter werden beispielsweise in Navigationssystemen routinemäßig eingesetzt.

Für einen breiten Einsatz von Kalman-Filtern auch in der Automatisierungstechnik waren bisher verschiedene Faktoren hinderlich. Zum einen war der Implementierungsaufwand für jede neue Anwendung vergleichsweise hoch und zum anderen war die Genauigkeit der Schätzergebnisse bei Vorhandensein von nur wenigen direkt messbaren Größen oft weniger zufriedenstellend, so dass Anlagenfahrer entsprechend wenig Vertrauen in die Schätzergebnisse hatten. Ein weiteres Problem beim generellen Einsatz von "Soft-Sensoren" ist, dass die geschätzten Größen nicht immer mit anderen Verfahren validiert werden können, um so das Vertrauen in die berechneten Ergebnisse des Schätzers zu verbessern.

In der europäischen Patentanmeldung mit dem Aktenzeichen EP 11150655.6 wurde ein Engineering-System der eingangs genannten Art vorgeschlagen, bei welchem in der Bibliothek ein vorgefertigter Funktionsbaustein mit einem als Kalman-Filter ausgeführten Zustandsschätzer enthalten ist. Dadurch wird bereits eine deutliche Verringerung des Implementierungsaufwands erreicht, da nicht mehr für jede Applikation ein neues Kalman-Filter implementiert und entworfen werden muss. Ein Anwender wird bei der Verwendung des Kalman-Filters nicht mehr durch den Aufwand, der bisher zur Implementierung des Ablaufs der Berechnungen in einem erweiterten Kalman-Filter erforderlich war, belastet. Das Kalman-Filter ist somit ohne Kenntnisse der Theorie implementierbar, da lediglich das Prozesswissen bei der Auswahl eines geeigneten Prozessmodells oder der Implementierung eines applikationsspezifischen Prozessmodells eingebracht werden muss. Damit ist die abschreckende Wirkung der Komplexität des Kalman-Filters umgangen. Bezüglich weiterer Einzelheiten der Realisierung eines Kalman-Filters als Funktionsbaustein und der dadurch in einem Engineering-System erzielten Vorteile wird auf die oben genannte europäische Patentanmeldung verwiesen.

Der Erfindung liegt die Aufgabe zugrunde, ein Engineering-System zu schaffen, das den Einsatz eines Kalman-Filters ermöglicht, welches sich durch eine verbesserte Genauigkeit der Schätzergebnisse auszeichnet, insbesondere wenn eine oder mehrere Messgrößen am Prozess nur zeitverzögert erfassbar sind.

Zur Lösung dieser Aufgabe weist das neue Engineering-System der eingangs genannten Art die im Anspruch 1 angegebenen Merkmale auf. In den abhängigen Ansprüchen sind vorteilhafte Weiterbildungen der Erfindung beschrieben.

Die Erfindung hat den Vorteil, dass nun auch Messwerte zur Verbesserung der Kalman-Filterergebnisse herangezogen werden können, deren Erfassung mit einer Verzögerung behaftet ist, welche die Zeitdauer der Abtastschritte des Kalman-Filters beispielsweise um Größenordnungen übersteigt, und/oder deren Erfassung in nicht äquidistanten Zeitabständen erfolgt. In vielen Anlagen müssen Labormessungen von den relevanten Qualitätsgrößen in nicht äquidistanten Zeitabständen vorgenommen werden. Das nun mögliche Einbinden dieser Laborwerte in das Kalman-Filter führt zu einer deutlichen Steigerung der Genauigkeit, da die ansonsten nicht validierbaren Schätzgrößen mit den Laborwerten abgeglichen werden können. Dies stärkt das Vertrauen des Anwenders in die Ergebnisse des Kalman-Filters. In vorteilhafter Weise wird dies ohne eine starke Erhöhung des Rechenaufwands und ohne jegliche Beeinträchtigung der Schätzgenauigkeit bezüglich der übrigen Zustandsgrößen erreicht. Die Verbesserung der Genauigkeit der Schätzergebnisse und das gesteigerte Vertrauen in diese können beide zu einer weiteren Verbreitung von Kalman-Filtern in der Prozessautomatisierung und aufgrund der mit Kalman-Filtern verbundenen Vorteile zu einer verbesserten Prozessführung und Produktqualität beitragen.

Eine Besonderheit bei der Durchführung von Labormessungen ist es, dass die Zeitpunkte der zusätzlichen Messungen nicht äquidistant sind und dass das Eintreffen neuer Analysewerte nicht a-priori bekannt ist. Noch gravierender wirkt sich allerdings die Zeitdifferenz zwischen Entnahme der Laborproben und Rückmeldung der Analysenergebnisse aus. Dies bedeutet, dass die Laborproben einen Prozesszustand beschreiben, der zu dem Zeitpunkt, zu welchem die Analyseergebnisse eintreffen, bereits deutlich in der Vergangenheit liegt und der Prozess sich in der Zwischenzeit bereits auf einen neuen Zustand zubewegt haben kann. Da das neue Kalman-Filter es ermöglicht, Analysewerte mit erheblicher Verzögerung gegenüber dem Zeitpunkt der Probenentnahme der jeweiligen Verzögerung entsprechend in die Schätzung einzubringen, ist das Kalman-Filter in der Prozessindustrie nun sinnvoll einsetzbar, selbst wenn Labordaten zur Ermittelung von Zustandsgrößen berücksichtigt werden müssen. Dies trifft insbesondere auf Anwendungen in der Chemiebranche, zum Beispiel bei einem Polymerisationsreaktor, in der Zementindustrie, zum Beispiel bei der Regelung eines Drehrohrofens, in der Biotechnologie und der Pharmabranche, zum Beispiel bei Regelungen an Bioreaktoren, im Bereich der Abwasseraufbereitung sowie in vielen anderen Anwendungsbereichen zu.

Ein weiterer Vorteil ist darin zu sehen, dass das neue Kalman-Filter, bei welchem Messwerte aus der Vergangenheit verzögert in die Schätzung eingebracht werden können, bereits in geeigneter Weise eine Reglerstruktur verändern, so dass nun auch Messwerte aus der Vergangenheit in der Regelung berücksichtigt werden können.

In vorteilhafter Weise ist das neue Kalman-Filter nicht nur für die Integration von Labormessungen sondern auch für die Einbindung von komplexeren Messmethoden in die Zustandsschätzung geeignet, welche kontinuierlich zeitverzögert Messergebnisse liefern. Um den verzögerten Messwert seiner Verzögerung entsprechend in die Schätzung einzubringen, wird der zum Zeitpunkt der Probenentnahme verpasste Abgleich zwischen dem Schätzergebnis und den dann noch nicht vorhandenen Laborergebnissen beim Eintreffen der Laborwerte nachgeholt. Dabei wird der verzögert eintreffende Messwert nur zu dem Zeitpunkt seines Eintreffens berücksichtigt. Da der Abgleich, wenn die durch die Laboranalyse verursachte Verzögerung ein z-faches, mit z einer natürlichen Zahl größer oder gleich 2, der Zeitdauer der Abtastschritte des Kalman-Filters beträgt, erfolgt der Abgleich somit z Schritte später und zwischendurch werden keine weiteren Abgleiche in demselben Zustand durchgeführt. Die Verzögerung kann in vorteilhafter Weise mit hoher Genauigkeit kompensiert werden, indem als Korrekturvektor der Differenzvektor des Zustandsvektors mit dem verzögert eingegebenen Messwert und des zum Zeitpunkts seiner Erfassung zunächst geschätzten Zustandsvektors, multipliziert mit der potenzierten Dynamikmatrix, wobei als Potenz der Faktor z der z-fachen Verzögerung verwendet wird, zu dem ohne Berücksichtigung des verzögert eingegebenen Messwerts berechneten Schätzwertsvektor zum Abgleich hinzu addiert wird. Durch diese Maßnahme wird vorteilhaft das gleiche Ergebnis erhalten, als wenn der Abgleich bereits zum Zeitpunkt der Probenentnahme erfolgt wäre.

Die beschriebene Vorgehensweise lässt sich auf das erweiterte Kalman-Filter übertragen. Dabei muss beachtet werden, dass die Dynamikmatrix A sich aufgrund der Linearisierung in jedem Abtastschritt des Kalman-Filters ändert und von daher die benötigte Potenz der Dynamikmatrix rekursiv mit den für jeden Abtastschritt gültigen Werten berechnet werden muss. In vorteilhafter Weise kann somit eine hohe Genauigkeit des erweiterten Kalman-Filters erreicht werden, indem das Matritzenprodukt der Dynamikmatritzen mit den in jeweiligen Abtastschritten während der Verzögerungsdauer gültigen Dynamikmatritzen berechnet wird.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:

Figur 1                einen Prozess mit einer Regeleinrichtung und ein Engineering-System,

Figuren 2 und 3     Zeitdiagramme der Polymer- bzw. Monomermasse in einem Polymerisationsreaktor als Ergebnisse eines Simulationslaufs und

Figur 4               ein Zeitdiagramm der Monomermasse in einem Polymerisationsreaktor als Ergebnisse eines weiteren Simulationslaufs.

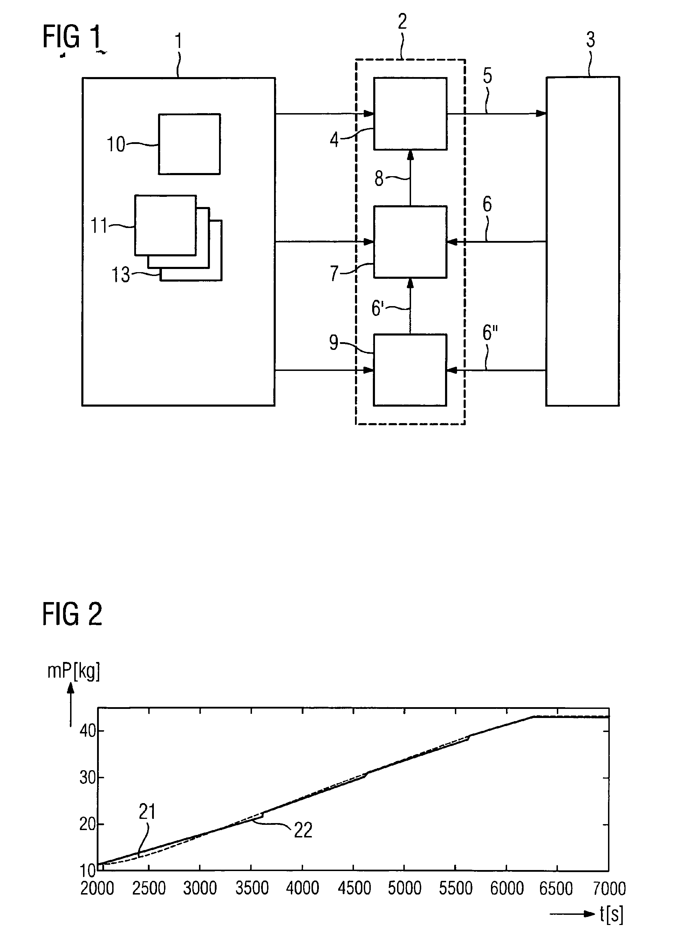

In Figur 1 ist ein Engineering-System 1 zusammen mit einer Regeleinrichtung 2 und einem zu regelnden verfahrenstechnischen Prozess 3 dargestellt. Der Prozess 3 ist mit Stellgliedern und Messumformern ausgestattet. Im Betrieb gibt ein Regler 4 der Regeleinrichtung 2 Stellgrößen 5 an den Prozess 3 aus. Leicht zugängliche Messgrößen 6, die mit Hilfe von Messumformern am Prozess 3 ohne relevante Verzögerung erfasst werden, sind einem Funktionsbaustein 7 zugeführt, der die Funktion eines als Kalman-Filter ausgeführten Zustandsschätzers besitzt. Neben den im Wesentlichen unverzögerten Messgrößen 6 erhält das Kalman-Filter 7 zusätzlich Laborergebnisse als verzögerungsbehaftete Messgrößen 6', die mit Hilfe einer Analyseeinrichtung 9 gewonnen werden. Für die Analyse erforderliche Proben 6" werden am Prozess 3 entnommen. Der Zeitpunkt der Probenentnahme beschreibt damit einen Zustand des Prozesses 3, der gegenüber dem Zeitpunkt, zu welchem die Analysewerte 6' beim Kalman-Filter 7 eintreffen, bereits deutlich in der Vergangenheit liegt. Aus den Messgrößen 6 und den Analyseergebnissen 6' bestimmt das Kalman-Filter 7 messtechnisch schwer zugängliche physikalische Größen 8 und gibt diese als Istgrößen an den Regler 4 zur Durchführung der Regelung weiter. Zur Verbesserung der Genauigkeit bei der Bestimmung der physikalischen Größen 8 ist das Kalman-Filter 7 dazu ausgebildet, die Analyseergebnisse 6' ihrer Verzögerung entsprechend in die Schätzung der Größen 8 einzubringen.

Die Regeleinrichtung 2 kann beispielsweise durch ein Automatisierungsgerät realisiert sein, auf welches ein Steuerprogramm 10, das unter anderem den Regler 4, den Funktionsbaustein 7 und den Funktionsbaustein für die Kommunikation mit der Analyseeinrichtung 9 umfasst, geladen ist. Das Engineering-System 1 ermöglicht eine komfortable Erstellung des Steuerprogramms 10 durch Bereitstellung vorgefertigter Funktionsbausteine aus einer Funktionsbausteinbibliothek 11. Selbstverständlich können zudem Funktionsbausteine, die nicht in der Bibliothek 11 vorhanden sind, individuell durch einen Anwender erstellt werden. Die Funktionsbausteinbibliothek 11 enthält einen als Kalman-Filter ausgeführten Zustandsschätzer als vorgefertigten Funktionsbaustein 13, der zur Erstellung des Steuerprogramms 10, in welchem der Zustandsschätzer eingesetzt wird, genutzt wurde.

Der Funktionsbaustein 13 aus der Bibliothek 11 dient zur Realisierung eines Zustandsschätzers, in dem der Filter-Algorithmus des erweiterten Kalman-Filters implementiert ist. Das Kalman-Filter ist ein mathematisches Modell zur Auswertung von Messdaten für die Regelungstechnik. Der Algorithmus des erweiterten Kalman-Filters dient der Zustandsschätzung nichtlinearer dynamischer Systeme. Dabei entfernt das Kalman-Filter die von den Messgeräten und dem Prozess verursachten Störungen. Als Basis dient ein mathematisches Modell des dynamischen Prozesses und der Messverfälschungen, bei welchen es sich um stochastische Störungen handeln kann. Das Kalman-Filter bietet somit eine Lösung des allgemeinen Problems, einen Zustand eines zeitdiskreten Prozesses zu schätzen, der durch lineare stochastische Differenzengleichungen beschrieben wird. Das Schätzproblem wird auf nichtlineare Prozesse erweitert, welche durch ein nichtlineares Zustandsraummodell beschrieben werden.

Das neue Verfahren zum Einbinden von sporadischen, verspätet eintreffenden Messwerten einer Messgröße in die Schätzung des Kalman-Filters basiert auf dem Ansatz, die verspätet eintreffenden Messwerte zu dem Zeitpunkt ihres Eintreffens der jeweiligen Verzögerung entsprechend korrekt in die Schätzung einzubringen. In allen anderen Zeitpunkten werden die Messwerte ignoriert. Bei dem oben erläuterten Beispiel einer Messwertbestimmung durch Laboranalyse geschieht dies, indem der zum Zeitpunkt der Probenentnahme verpasste Abgleich zwischen dem Schätzergebnis und den dann noch nicht vorhandenen Laborergebnissen beim Eintreffen der Laborwerte nachgeholt wird. Die durch Laboranalyse gewonnenen Messwerte werden nur zum Zeitpunkt des Eintreffens als solche behandelt. Zu allen anderen Zeitpunkten wird durch Anhebung der zugehörigen Elemente der Kovarianzmatrix oder durch Absenkung der Kalman-Filter-Verstärkung dieser Messkanal quasi ignoriert. Dabei führt die beschriebene Anhebung automatisch auch zur Absenkung der Kalman-Filter-Verstärkung.

Für eine Herleitung eines geeigneten Kalman-Filter Algorithmus wird zur vereinfachten Darstellung ein lineares Kalman-Filter betrachtet. Diese Herleitung lässt sich aber ohne weiteres auf das erweiterte Kalman-Filter übertragen.

Für die Formeln der Herleitung werden folgende Formelzeichen verwendet:

$\hat{x}$  Vektor der Schätzwerte der Zustände im Filterschritt

$x^*$  Vektor der Schätzwerte der Zustände im Prädiktionsschritt

$K(n)$  Matrix der Filterverstärkung auf Basis der Laborwerte

A  Systemmatrix der Zustandsraumdarstellung, auch Dynamikmatrix genannt

B  Eingangsmatrix der Zustandsraumdarstellung

u  Vektor der Eingangsgrößen

Q  Kovarianzmatrix des Systemrauschens

R  Kovarianzmatrix des Messrauschens

*P\**       Prädiktions-Kovarianzmatrix

$\hat{P}$       Filter-Kovarianzmatrix

*K(k)*      Verstärkungsmatrix auf Basis der Messwerte

C       Ausgangsmatrix der Zustandsraumdarstellung

D       Auswahlmatrix der Labormessungen

k       aktueller Zeitpunkt

n       Zeitpunkt der Probenentnahme

Z       Zeitdauer der Laboranalyse

I       Einheitsmatrix

A       Kovarianzmatrix der Labormessungen.

Um die Herleitung des zugehörigen Filters korrekt durchführen zu können, muss zunächst die Frage geklärt werden, wie sich prinzipiell ein Abgleich z Abtastschritte später auf das Filter auswirken würde, wenn er eigentlich zum 1. Abtastschritt zugehörig wäre. Ein Abgleich zum Zeitpunkt n erfolgt durch

$$\hat{x}(n) = x*(n) + K(n)\big(y(n) - Cx*(n)\big) = x*(n) + \Delta\hat{x}(n) .$$

Dabei wird aus dem a-priori Schätzwert *x\*(n)* des Prädiktionsschritts unter Berücksichtigung der aktuellen Messwerte *y(n)* der a-posteriori Schätzwert $\hat{x}$(n) gebildet.
Dieser Abgleich fließt nun wieder in den Prädiktionsschritt ein

$$x*(n+1) = A\big(x*(n) + \Delta\hat{x}(n)\big) + Bu(n) .$$

In z Abtastschritten nach dem Abgleich ergibt sich dann unter der Annahme, dass zwischenzeitlich keine weiteren Abgleiche durchgeführt wurden

$$x*(n+z) = A^z\big(x*(n) + \Delta\hat{x}(n)\big) + \sum_{r=0}^{z-1} A^{z-1-r} Bu(n+r) .$$

Der eigentliche Abgleich wird dabei nur von der Dynamikmatrix A über die Zeit beeinflusst.
Erfolgen nun der Abgleich z Schritte zu spät und zwischendurch keine weiteren Abgleiche in demselben Zustand, so muss der Differenzvektor $\Delta\hat{x}$ mit der potenzierten Dynamikmatrix $A^z$ oder bei veränderlichen Dynamikmatritzen mit dem Matritzenprodukt $A_{n+z-1}...A_{n+1}A_n$ multipliziert werden, um das gleiche Ergebnis zu erhalten, als wenn der Abgleich schon sofort erfolgt wäre, das heißt

$$\hat{x}(n+z) = x*(n+z) + A^z \Delta \hat{x}(n) \ .$$

Dies soll nun als Ansatz für ein neues Kalman-Filter dienen. Aus der Differenz

$$x(n+z) - \hat{x}(n+z) = x(n+z) - x*(n+z) - A^z K(n)\big(C\big(x(n) - x*(n)\big) + w(n)\big)$$

ergibt sich die Kovarianz zu

$$\begin{aligned}\hat{P}(n+z) &= E\big\{\big(x(n+z) - \hat{x}(n+z)\big)\big(x(n+z) - \hat{x}(n+z)\big)^T\big\} = \\ &\quad P*(n+z) + A^z K(n)CP*(n)C^T K(n)^T \big(A^z\big)^T + A^z K(n)RK(n)^T \big(A^z\big)^T - \\ &\quad E\big\{\big(x(n+z) - x*(n+z)\big)\big(x(n) - x*(n)\big)^T\big\}C^T K(n)^T \big(A^z\big)^T - \\ &\quad A^z K(n)CE\big\{\big(x(n) - x*(n)\big)\big(x(n+z) - x*(n+z)\big)^T\big\}\end{aligned}$$

Aufgrund des Ansatzes ist $\Delta\hat{x}(n)=x(n)-x*(n)$ und $\Delta\hat{x}(n+z)=x(n+z)-x*(n+z)$ korreliert nach $\Delta\hat{x}(n+z)=A^z\Delta\hat{x}(n)$. Daraus ergibt sich die Kovarianz zu

$$\hat{P}(n+z) = P*(n+z) + A^z \big[\big(I - K(n)C\big)P*(n)\big(I - K(n)C\big)^T - P*(n) + K(n)RK(n)^T\big]\big(A^z\big)^T$$

Daraus ergibt sich die Verstärkungsmatrix zu

$$K(n) = P*(n)C^T \big(CP*(n)C^T + R\big)^{-1} \ .$$

Zusammengefasst ergibt sich das neue lineare Filter zu: Prädiktionsschritt:

$$x * (k + 1) = A\hat{x}(k) + Bu(k)$$

$$P * (k + 1) = A\hat{P}(k)A^T + Q$$

Filterschritt:

$$\hat{x}(k + 1) = x * (k + 1) + \begin{bmatrix} K(k + 1) & A^{z}K(n) \end{bmatrix} \left( \begin{bmatrix} y(k + 1) \\ y(n) \end{bmatrix} - \begin{bmatrix} Cx * (k + 1) \\ Dx * (n) \end{bmatrix} \right)$$

$$\hat{P}(k + 1) = \left( I - K(k + 1)C \right) P * (k + 1)\left( I - K(k + 1)C \right)^{T} +$$
$$A^{z} \left[ \left( I - K(n)D \right) P * (n)\left( I - K(n)D \right)^{T} - P * (n) \right] \left( A^{z} \right)^{T} +$$
$$\begin{bmatrix} K(k + 1) & A^{z}K(n) \end{bmatrix} \begin{bmatrix} R & 0 \\ 0 & \Lambda \end{bmatrix} \begin{bmatrix} K(k + 1) & A^{z}K(n) \end{bmatrix}^{T}$$

$$K(k + 1) = P * (k + 1)C^{T} \left( CP * (k + 1)C^{T} + R \right)^{-1}$$

$$K(n) = \begin{cases} 0 & \text{für } k + 1 \neq n + z \\ P * (n)D^{T} \left( DP * (n)D^{T} + \Lambda \right)^{-1} & \text{für } k + 1 = n + z \end{cases}$$

Dabei werden über die Matrix D diejenigen Zustände, welche im Labor analysiert werden, ausgewählt.

Matrix D: $x = \begin{bmatrix} \tilde{x} \\ x_D \end{bmatrix} = \begin{bmatrix} \tilde{x} \\ D \cdot x \end{bmatrix}$, mit $x_D$: im Labor bestimmte Zustände.

Die Rauschmatrix A beschreibt die Unsicherheit in den Laborergebnissen. Sie kann auch als Einstellparameter für das Korrekturverhalten des Filters verwendet werden. Ist sie klein, so wird das Filter die Korrektur vollständig übernehmen, ist sie größer, so wird nur die Tendenz, nicht aber der exakte Wert vom Kalman-Filter übernommen.

Diese Gleichungen lassen sich auf das erweiterte Kalman-Filter übertragen. Dabei muss beachtet werden, dass die Dynamikmatrix A sich aufgrund der Linearisierung in jedem Abtastschritt ändert und von daher die benötigte Potenz der Dynamikmatrix rekursiv mit den für jeden Abtastschritt gültigen Werten berechnet werden muss.

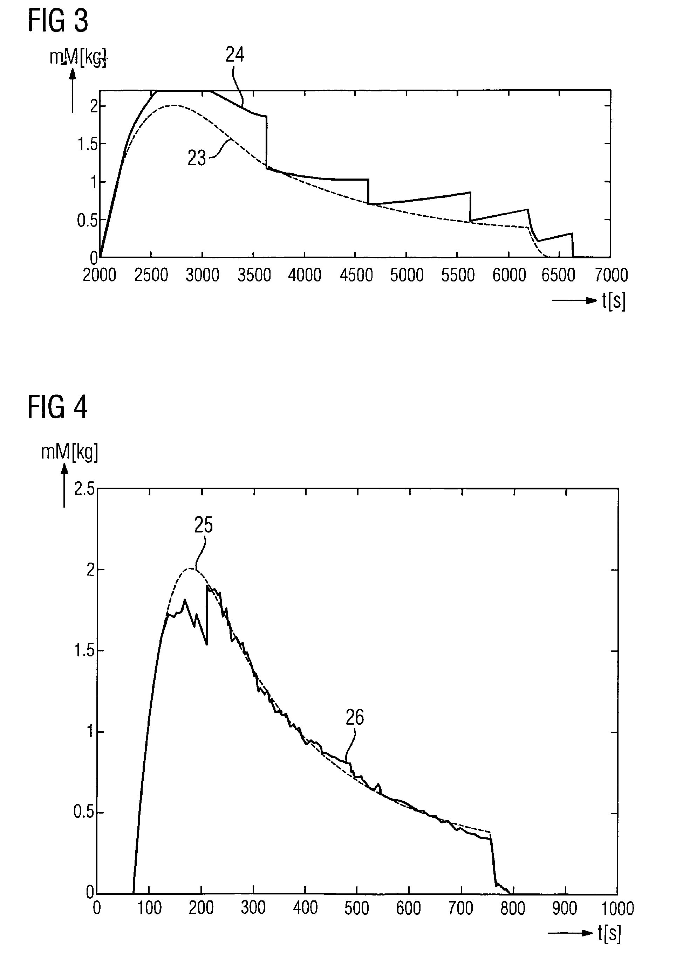

Die Vorteile des neuen Kalman-Filters sollen anhand der Simulationsergebnisse für einen Batch-Prozess in einem Polymerisationsreaktor verdeutlicht werden. Dazu ist in Figur 2 ein Zeitdiagramm der im Reaktor befindlichen Polymermasse, in Figur 3 ein Zeitdiagramm der Monomermasse im Reaktor dargestellt. Auf der Abszisse ist jeweils die Zeit t in der Einheit Sekunden (s) aufgetragen. An der Ordinatenskala in Figur 2 kann die Polymermasse mP in der Einheit Kilogramm (kg), in Figur 3 die Monomermasse mM ebenfalls in der Einheit Kilogramm abgelesen werden. Für die Simulation wurde die Modellierung des internen Modells des erweiterten Kalman-Filters dahingehend manipuliert, dass das Filter nicht über die exakten Modellkenntnisse verfügt. Daraus ergeben sich Abweichungen zwischen einem realen Verlauf 21 und einem geschätzten Verlauf 22 der Polymermasse mP sowie zwischen einem realen Verlauf 23 und einem geschätzten Verlauf 24 der Monomermasse mM. Während eines Befüllvorgangs des Reaktors im Anfangsbereich der beiden Zeitdiagramme steigen sowohl die Monomermasse als auch die Polymermasse an. Danach wird aufgrund der Umwandlung von Monomermasse in Polymermasse die Monomermasse mM verringert, während sich die Polymermasse mP erhöht. Aufgrund des Modellfehlers stellen sich zunehmend Abweichungen des geschätzten Verlaufs 22 vom realen Verlauf 21 der Polymermasse und des geschätzten Verlaufs 24 vom realen Verlauf 23 der Monomermasse ein. Zur Verbesserung der Schätzergebnisse werden mehrmalig Laborergebnisse als Messwerte für die im Reaktor vorhandene Monomermasse mM während des Durchlaufs einer Charge eingespeist. Die Dauer der Laboranalyse, das heißt die Verzögerung des Zeitpunkts der Eingabe des Messwerts in das Kalman-Filter gegenüber dem Zeitpunkt seiner Erfassung am Prozess, wurde bei der Simulation mit 600 s angesetzt. Eine erste Einspeisung eines durch Laboranalyse gewonnenen Messwerts der Monomermasse mM findet zum Zeitpunkt t = 3.600 s statt. Insbesondere in Figur 3 ist deutlich zu sehen, dass sich aufgrund der Einbindung des verzögerten Laborergebnisses in das Kalman-Filter eine erhebliche Verbesserung des Schätzwerts der Monomermasse mM ergibt. Kurz nach dem Eintreffen des Laborergebnisses zum Zeitpunkt t = 3.600 s weicht der geschätzte Verlauf 24 vom realen Verlauf 23 der Monomermasse mM nur geringfügig ab. An den Verläufen 21 und 22 der Polymermasse mP ist ebenfalls eine Verbesserung der Schätzergebnisse aufgrund der Einbindung des durch Laboranalyse verzögert erhaltenen Messwerts erkennbar. Weitere Laborergebnisse wurden in der Simulation zu den späteren Zeitpunkten t = 4.600 s, 5.600 s und 6.600 s in das Kalman-Filter eingebunden. Dies ist am geschätzten Verlauf 24 der Monomermasse mM an deutlichen Sprüngen zu den genannten Zeitpunkten erkennbar. Offsetfehler werden durch die Einbindung von Laborergebnissen nahezu vollständig korrigiert. Die Dynamik der geschätzten Zustände wird dadurch kaum beeinflusst.

Figuren 2 und 3 zeigen ein Beispiel mit extrem starken Fehlern der Modelldynamik. In vielen Fällen kann bereits durch wenige Korrekturen die Güte der Schätzung nachhaltig deutlich verbessert werden. Dies soll anhand der Figur 4 gezeigt werden, in der ein realer Verlauf 25 und ein geschätzter Verlauf 26 der Monomermasse mM als Simulationsergebnis für ein Modell mit starkem Offsetfehler dargestellt sind. Bereits durch Integration eines einzigen verzögerten Messwerts zum Zeitpunkt t = 220 s wird der entstandene Offsetfehler beseitigt und ein stark verbessertes Schätzergebnis erhalten.

## Patentansprüche

1.   Engineering-System zum Erstellen eines Steuerprogramms (10), wobei das Steuerprogramm mehrere Software-Funktionsbausteine umfasst, welche aus einer Bibliothek (11) entnommen sind, und wobei die Bibliothek (11) zumindest einen Funktionsbaustein (13) mit einem als zeitdiskretes Kalman-Filter ausgeführten Zustandsschätzer umfasst, der dazu ausgebildet ist, zumindest einen Messwert (6') zumindest einer Messgröße (6'') als Messwert einer Zustandsgröße zu verarbeiten, wobei der Zeitpunkt der Eingabe des Messwerts (6') in das Kalman-Filter (7) gegenüber dem Zeitpunkt seiner Erfassung am Prozess (3) um ein z-faches, mit z einer natürlichen Zahl größer oder gleich 2, der Zeitdauer der Abtastschritte des Kalman-Filters verzögert ist und der Messwert seiner Verzögerung entsprechend in die Schätzung eingebracht wird.

2.   Engineering-System nach Anspruch 1, **dadurch gekennzeichnet, dass** das Kalman-Filter (7) dazu ausgebildet ist, zur Verarbeitung des verzögert eingegebenen Messwerts den ohne seine Berücksichtigung berechneten Vektor x* (n+z) der Schätzwerte der Zustände im Prädiktionsschritt abzugleichen entsprechend der Formel:

$$\hat{x}(n+z) = x^*(n+z) + A_{n+z-1}...A_{n+1}A_n \Delta\hat{x}(n) \ ,$$

mit
$A_{n+z-1}...A_{n+1}A_n$ Matrizenprodukt von z Dynamikmatritzen A des Kalman-Filters und
$\Delta x(n)$ Differenzvektor des Vektors $\hat{x}(n)$ der Schätzwerte der Zustände im Filterschritt mit dem verzögert eingegebenen Messwert und des zum Zeitpunkt seiner Erfassung zunächst geschätzten Vektors x* (n) der Schätzwerte der Zustände im Prädiktionsschritt.

3.   Engineering-System nach Anspruch 2, **dadurch gekennzeichnet, dass** bei einem erweiterten Kalman-Filter das Matritzenprodukt der Dynamikmatritzen mit den in den jeweiligen Abtastschritten während der Verzögerung gültigen Dynamikmatritzen berechnet wird.

FIG 1

FIG 2

## FIG 3

## FIG 4

Europäisches
Patentamt

European
Patent Office

Office européen
des brevets

## EUROPÄISCHER RECHERCHENBERICHT

Nummer der Anmeldung

EP 11 17 2644

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | AJIT GOPALAKRISHNAN ET AL: "Incorporating delayed and infrequent measurements in Extended Kalman Filter based nonlinear state estimation", JOURNAL OF PROCESS CONTROL, Bd. 21, Nr. 1, 1. Januar 2011 (2011-01-01), Seiten 119-129, XP55014415, ISSN: 0959-1524, DOI: 10.1016/j.jprocont.2010.10.013 * das ganze Dokument * ----- | 1-3 | INV. G05B13/04 |
| X | US 6 757 579 B1 (PASADYN ALEXANDER J [US]) 29. Juni 2004 (2004-06-29) * Spalte 29, Zeile 50 - Zeile 67 * ----- | 1-3 | |
| X | LI R ET AL: "On-line state and parameter estimation of EPDM polymerization reactors using a hierarchical extended Kalman filter", JOURNAL OF PROCESS CONTROL, OXFORD, GB, Bd. 14, Nr. 8, 1. Dezember 2004 (2004-12-01), Seiten 837-852, XP027139908, ISSN: 0959-1524 [gefunden am 2004-07-28] * das ganze Dokument * ----- | 1-3 | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| München | 25. Januar 2012 | Rakoczy, Tobias |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 17 2644

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-01-2012

| Im Recherchenbericht angeführtes Patentdokument | Datum der Veröffentlichung | Mitglied(er) der Patentfamilie | Datum der Veröffentlichung |
|---|---|---|---|
| US 6757579 B1 | 29-06-2004 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 11150655 A